# EUROPEAN PATENT APPLICATION

(11) **EP 4 155 353 A1**
(43) Date of publication of application: **29.03.2023**
(21) Application number: 21809093.4
(22) Date of filing: 12.05.2021
(51) Int. Cl.: C09D 11/17, C09D 11/18, B43K 1/08, B43K 7/01

(54) **INK COMPOSITION FOR WATER-BASED BALLPOINT PEN**

(30) Priority: 18.05.2020 JP 2020086613
(71) Applicant: MITSUBISHI PENCIL COMPANY, LIMITED, Tokyo 140-8537 (JP)
(72) Inventor: ICHIKAWA Shuji, Tokyo 140-8537 (JP)
(74) Representative: Vossius & Partner Patentanwälte Rechtsanwälte mbB
(86) International application number: PCT/JP2021/018061
(87) International publication number: WO 2021/235292

(57) **Abstract**

Provided is an ink composition for a water-based ballpoint pen that produces a drawn line as intensely black as an India ink and has a distinctive aroma. An ink composition for a water-based ballpoint pen according to the present disclosure contains at least a black pigment and borneol, and the black pigment satisfies the following requirements X to Z.
X: 50% particle size (D50) in a cumulative particle size distribution in terms of volume of 0.2 to 1.0 µm.
Y: 10% particle size (D10) in a cumulative particle size distribution in terms of volume of 0.1 to 0.3 µm.
Z: 90% particle size (D90) in a cumulative particle size distribution in terms of volume of 1.0 to 5.0 µm.

## Description

### Technical Field

The present description relates to an ink composition for a water-based ballpoint pen that produces a drawn line that is intensely black like a liquid India ink and has a distinctive aroma.

### Background Art

In the related art, it is disclosed that an India ink composition can be used for water-based printing inks, fountain pens, felt-tip pens, and ink jet printing inks as black inks besides its use in calligraphy (e.g., see Patent Document 1).

The India ink composition contains, with respect to the total amount of the India ink composition, 1 to 20 parts by weight of polysaccharides such as pullulan or an acrylic water-soluble copolymer of a specific formula, as a protective colloid in place of conventional glue, in addition to a black pigment such as carbon black, a dispersing agent, and water. However, the liquid India ink composition has a problem that a strongly black line of India ink cannot be obtained when used for an ink of a water-based ballpoint pen.

### Citation List

### Patent Document

Patent Document 1: JP S53-063133 A (e.g., Claims, Examples)

### Summary of Invention

### Technical Problem

In light of the known issues described above, the present disclosure is to solve these issues and has an object of providing an ink composition for a water-based ballpoint pen that produces a drawn line that is intensely black like a liquid India ink and has a distinctive aroma. Solution to Problem

As a result of intensive studies in light of the above-mentioned issues and the like, the present inventor found that the ink composition for a water-based ballpoint pen sought for the object described above can be obtained by blending at least a black pigment that satisfies a predetermined cumulative particle size distribution requirement and a specific aromatic substance, and thus completed the present disclosure.

That is, an ink composition for a water-based ballpoint pen according to the present disclosure is characterized by containing at least a black pigment and borneol, and the black pigment satisfies the following requirements X to Z:
X: 50% particle size in a cumulative particle size distribution in terms of volume is 0.2 to 1.0 um.
Y: 10% particle size in a cumulative particle size distribution in terms of volume is 0.1 to 0.3 µm.
Z: 90% particle size in a cumulative particle size distribution in terms of volume is 1.0 to 5.0 um.

The (volume-average particle size)/(number-average particle size) of the black pigment is preferably 2 to 8.

A water-based ballpoint pen according to the present disclosure is provided with the ink composition for a water-based ballpoint pen having the composition described above.

The water-based ballpoint pen preferably has A/B of 250 to 500, where A is an average flow of the water-based ballpoint pen (mg/0 - 100 m) , and B is a ball diameter (mm).

### Advantageous Effects of Invention

According to the present disclosure, provided are: an ink composition for a water-based ballpoint pen that produces a drawn line that is as intensely black as a liquid India ink and has a distinctive aroma; and a water-based ballpoint pen.

In the present specification, both of general explanation described above and detailed explanation described below are exemplification and explanation and do not limit the present disclosure described in Claims. Description of Embodiments

At least some embodiments of the present disclosure will be described in detail below. However, note that the technical scope of the present disclosure is not limited to the embodiments described below and includes the invention described in Claims and equivalents thereof.

The ink composition for a water-based ballpoint pen according to the present disclosure contains at least a black pigment and borneol, and the black pigment satisfies the following requirements X to Z regarding the particle size distribution.

X: 50% particle size (D50) in a cumulative particle size distribution in terms of volume is 0.2 to 1.0 um.

Y: 10% particle size (D10) in a cumulative particle size distribution in terms of volume is 0.1 to 0.3 µm.

Z: 90% particle size (D90) in a cumulative particle size distribution in terms of volume is 1.0 to 5.0 µm.

### Black pigment

The black pigment to be used in the present disclosure is not particularly limited, and various kinds of black pigments can be used, as long as the black pigment satisfies the requirements X to Z regarding the cumulative particle size distribution in terms of volume.

Examples of the black pigment that can be used include black pigments that have the predetermined cumulative particle size distribution described above. They are provided from at least one from the group of known carbon black, India ink (intentionally utilizing soot particles from ancient times: including solid India ink), iron oxide, and titanium black that have been used for industrial applications.

The solid India ink is produced intentionally by subjecting soot from ancient times collected from lamp smoke from rapeseed oil or sesame oil or pine smoke to kneading and solidifying by using aromatic substance and glue.

"Particle size" in the present disclosure refers to a particle size based on a cumulative particle size curve in terms of volume of the particle size distribution measured by use of a laser diffraction/scattering particle size distribution analyzer. "D50", "D10", and "D90" respectively refer to 50% particle size, 10% particle size, and 90% particle size in terms of volume in the cumulative particle size distribution, and each refers to a particle size at which the integrated value in terms of volume is at 50%, 10%, or 90% in a cumulative particle size curve of particle size distribution measured by using a laser diffraction/scattering particle size distribution analyzer.

The particle size of the black pigment can be measured by using, for example, a particle size distribution analyzer HRA 9320-X100, available from Nikkiso Co., Ltd., and the cumulative particle size distribution in terms of volume can be evaluated based on the measurement result by using an attached software.

Adjustment of the black pigment satisfying the requirements X to Z of the cumulative particle size distribution in terms of volume described above can be performed by setting dispersion conditions of the black pigment to be used.

For example, adjustment can be performed by suitably combining a dispersion method (media dispersion, roll dispersion), medium (type, size), and dispersion time.

The media dispersion apparatus to be used is not particularly limited, and examples thereof include STARMILL NANO GETTER and STARMILL ZRS (product names, Ashizawa Finetech Ltd.), Ultra Apex Mill and Dual Apex Mill (product names, Kotobuki Industries Co., Ltd.), Paint Shaker and Pico Grain Mill (product names, Asada Iron Works Co., Ltd.), MicroMedia (product name, Bühler), MSC mill (product name, Nippon Coke & Engineering Co., Ltd.), and a sand mill.

From the perspectives of achieving efficient dispersion treatment and obtaining the predetermined cumulative particle size distribution, the dispersion media particle size to be employed can be 0.05 to 2.0 mm. The material of the dispersion medium particles to be used is not particularly limited; however, from the perspective of reducing metal impurities in the dispersion, glass beads or media of ceramics such as alumina, zirconia, silicon carbide, and silicon nitride can be used. For example, the circumferential speed of rotation (circumferential speed at a tip portion of a rotor) of a media dispersion apparatus and dispersion time can be set to predetermined circumferential speed and time based on the black pigment type.

Furthermore, the roll dispersion include those performing dispersion by compression action utilizing the pressure between rolls and those performing dispersion by shearing action between rolls having different circumferential speeds, and examples thereof include roll mills. The roll mill is not particularly limited, and a known three-roll mill can be used. The three-roll mill has three rolls (rear roll, middle roll, and front roll), and can disperse (adjust) the black pigment achieving the predetermined cumulative particle size distribution of the present disclosure by providing pressure and shearing force by rotating and coming into contact in directions that differ to each other and at a predetermined speed ratio.

By using the black pigment having the cumulative particle size distribution as described above (including dispersion), pitch-blackness of a drawn line can be intensified, and thus a drawn line intensely black like a liquid India ink can be obtained, which is novel.

Among black pigments that satisfy the requirements X to Z described above of the cumulative particle size distribution in terms of volume obtained by, for example, the settings of dispersion conditions described above, from the perspectives of achieving further distinctive pitch-black, further exhibiting the effects of the present disclosure, and handling, use of carbon black or a black pigment obtained from India ink is desired.

In the present disclosure, from the perspectives of pitch-blackness of a drawn line and glossiness, (volume-average particle size) / (number-average particle size) of the black pigment is preferably 2 to 8.

As the means to adjust the (volume-average particle size) / (number-average particle size) to be in a range of 2 to 8, such adjustment can be performed by, for example, mixing of pigments having different average particle sizes, classification, or filtration treatment.

The content of the black pigment satisfying the predetermined requirements X to Z of the cumulative particle size distribution is preferably 3 to 30 mass% (hereinafter, "mass%" is simply referred to as "%"), and more preferably 5 to 20%, with respect to the total amount of the ink composition.

When the content of the black pigment with these characteristics is less than 3%, the effects of the present disclosure cannot be exhibited. On the other hand, the content of greater than 30% is not preferable because touch of writing may be heavy or stability of the ink may be impaired.

### Borneol

Borneol used in the present disclosure is a component that evokes the aroma of India ink and is a bicyclic monoterpene represented by a chemical formula of C10H18O, also known as Borneo camphor, and having a molecular weight of 154.14. The aroma of borneol is similar to that of camphor, but borneol has a lower volatility than camphor, has a bornane skeleton like camphor, and can be obtained by reducing camphor. Note that, typically, India ink itself has no aroma of India ink, and the aroma is developed from masking of glue (component evokes the aroma of India ink) .

Furthermore, borneol has optical isomers, and the (-) form ("l-borneol", see the following chemical formula) is included in Dryobalanops aromatica and lavender, and the (+) form is included in Blumea balsamifera and the like.

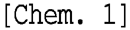

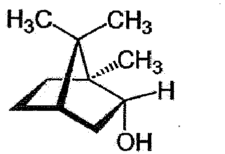

The content of borneol is preferably 0.001 to 10%, and more preferably 0.01 to 5%, with respect to the total amount of the ink composition. By setting the content of borneol to 0.001% or greater, the aroma of India ink can be evoked. Meanwhile, by setting the content to 10% or less, stability of the ink can be maintained.

Note that, together with borneol, as necessary, an aromatic substance such as spikenard, sandalwood, plum blossom, and musk may be contained in an appropriate amount for, for example, enhancing retention of the aroma and differentiation of the aroma.

### Ink composition for water-based ballpoint pen

The ink composition for a water-based ballpoint pen of the present disclosure contains at least a black pigment and borneol, and the black pigment satisfies the requirements X to Z above. In addition, it can also contain a water-soluble solvent and a conventional colorant besides the black pigment described above, as necessary.

Examples of the water-soluble solvent that can be used include glycols such as ethylene glycol, diethylene glycol, triethylene glycol, propylene glycol, polyethylene glycol, 3-butylene glycol, thiodiethylene glycol, and glycerin; ethylene glycol monomethyl ether, and diethylene glycol monomethyl ether. These solvents may be used alone or as a mixture. The content of the water-soluble solvent is preferably 0 to 40% with respect to the total amount of the ink composition.

As the colorant that can be used, a water-soluble dye, an inorganic pigment such as black pigment or organic pigments can be used in an appropriate amount as necessary in a necessary amount in a range that does not impair the effects of the present disclosure.

For the water-soluble dye, a direct dye such as a black direct dye, an acid dye, an edible dye, or a basic dye can be used in an appropriate amount in a range that does not impair the effects of the present disclosure.

The ink composition for a water-based ballpoint pen of the present disclosure contains at least the black pigment and borneol, the black pigment satisfying the requirements X to Z described above. In addition to the colorant and the water-soluble solvent, the ink composition for a water-based ballpoint pen of the present disclosure can appropriately contain, as the balance, water as a solvent (e.g., tap water, purified water, distilled water, ion exchanged water, or pure water) as well as a dispersant, a lubricant, a thickener, a pH adjuster, a corrosion inhibitor, a preservative or an antibacterial agent, or the like, in a range that does not impair the effects of the present disclosure.

Examples of the dispersant that can be used include nonionic and anionic surfactants, and water-soluble resins. Examples of the water-soluble resin include synthetic water-soluble macromolecules such as glue, gelatin, carboxymethylcellulose, polyvinyl alcohol, polyacrylic acid, acrylic acid copolymers, maleic acid resins, polyvinyl pyrrolidone, polyethylene oxide, water-soluble acrylic resins, and water-soluble styrene-acrylic resins, and water-dispersible emulsions such as acrylic resins, alkyd resins, vinyl resins, polyester resins, styrene resins, maleic acid resins, and urethane resins.

Examples of the lubricant that can be used include non-ionic types such as fatty acid esters of polyhydric alcohols, higher fatty acid esters of sugars, polyoxyalkylene higher fatty acid esters, and alkyl phosphate esters; anionic types such as phosphate, alkyl sulfonates of higher fatty acid amides, and alkyl allyl sulfonates; derivatives of polyalkylene glycols, and polyether modified silicones, which are also used as surface treating agents for pigments.

As the thickener that can be used, for example, at least one selected from the group consisting of synthetic polymers, cellulose, and polysaccharides is preferred. Specific examples thereof include arabic gum, tragacanth gum, guar gum, locust bean gum, alginic acid, carrageenan, gelatin, xanthan gum, welan gum, succinoglycan, diutan gum, dextran, methyl cellulose, ethyl cellulose, hydroxyethyl cellulose, carboxymethyl cellulose, starch glycolic acid and salts thereof, polyvinylpyrrolidone, polyvinyl methyl ether, polyacrylic acid and salts thereof, polyethylene oxide, copolymers of vinyl acetate and polyvinylpyrrolidone, and styrene-acrylic acid copolymers and salts thereof.

Examples of the pH adjuster include ammonia, urea, monoethanolamine, diethanolamine, triethanolamine, alkali metal salts of carbonic acid and phosphoric acid such as sodium tripolyphosphate and sodium carbonate, and hydrates of alkali metals such as sodium hydroxide. Furthermore, examples of the corrosion inhibitor include benzotriazole, tolyltriazole, dicyclohexylammonium nitrite, and saponins. Examples of the preservative or antibacterial agent include phenol, omadine sodium, sodium benzoate, thiazoline-based compounds, and benzimidazole compounds.

For the components, such as the dispersant, the lubricant, the thickener, the pH adjuster, the corrosion inhibitor, the preservative, or the antibacterial agent, one type may be used alone, or a combination of two or more types of these may be used. Commercially available products of these polysaccharides, if present, can be used.

The ink composition for a water-based ballpoint pen of the present disclosure can be prepared by combining at least the black pigment satisfying the requirements X to Z described above, borneol, the water-soluble solvent, and other components as appropriate depending on the application of the ink for a ballpoint pen, stirring and mixing the combined components using a stirrer such as a homomixer, a homogenizer, or a disperser, and optionally, filtering or centrifuging the mixture to remove coarse particles in the ink composition.

In addition, a pH level (at 25°C) of the ink composition for water-based ballpoint pens of the present disclosure is adjusted to preferably 5 to 10, more preferably 6 to 9.5, by using a pH adjuster or the like from the perspective of usability, safety, stability of the ink itself, and matching with the ink container.

The ink composition for a water-based ballpoint pen of the present disclosure is used in a ballpoint pen provided with a pen tip portion such as a ballpoint pen tip, as a water-based ballpoint pen.

The water-based ballpoint pen of the present disclosure includes a ballpoint pen equipped with the ink composition for water-based ballpoint pens having the above-mentioned composition in an ink container (refill) for a ballpoint pen having a ball with a diameter of 0.18 to 2.0 mm. It is also equipped with, as an ink follower, a material that is not compatible with the water-based ink composition in the ink container and has a smaller specific gravity than the water-based ink composition, for example, polybutene, silicone oil, or mineral oil. As long as the ball having the diameter in the range described above is equipped, the structure of the water-based ballpoint pen to be used is not particularly limited. In particular, preferred is a water-based ballpoint pen with a refill in which the water-based ink composition is filled in an ink container, which is a polypropylene tube, the water-based ballpoint pen having a stainless-steel tip at the tip (ball is cemented carbide).

Furthermore, the ballpoint pen may be a direct liquid type ballpoint pen having a collector structure (ink retention mechanism) in which a shaft cylinder itself, as an ink container, is filled with the ink composition for water-based ballpoint pens having the composition described above.

The ink composition for a water-based ballpoint pen of the present disclosure composed as described above specifically contains at least the black pigment satisfying the requirements X to Z above, and borneol. Since opacifying properties and glossiness of a drawn line can be adjusted by setting the particle size distribution of the black pigment to be in the specific range, an ink composition for a water-based ballpoint pen producing a drawn line that is intensely black like a liquid India ink and having a distinctive aroma can be obtained.

The water-based ballpoint pen of the present disclosure preferably contains the ink composition for a water-based ballpoint pen having the composition described above and preferably has A/B of 250 to 500, where A is an average flow (consumption) of the water-based ballpoint pen (mg/0-100 m), and B is a ball diameter (mm).

By making the water-based ballpoint pen with A/B being 250 to 500, a water-based ballpoint pen that can achieve a drawn line that is intensely pitch-black despite a flow rate higher than a typical black water-based ballpoint pen can be obtained.

### Example 1

Next, the present disclosure will be described in more detail using Production Examples 1 to 3 in which black pigments to be used satisfy the requirements X to Z, Examples 1 to 6 of the ink compositions for water-based ballpoint pens, and Comparative Examples 1 to 3; however, the present disclosure is not limited to the following Examples.

Furthermore, the "D50", "D10", and "D90" of the black pigments obtained in Production Examples 1 to 3 were the following distribution. "D50", "D10", "D90", and (volume-average size)/(number-average size) of the black pigment were calculated by using a particle size distribution analyzer HRA 9320-X100, available from Nikkiso Co., Ltd.

### Production Example 1: Production of black pigment dispersion 1 meeting requirements X to Z

A mixture prepared by 24 mass% of carbon black (MCF-88: available from Mitsubishi Chemical Corporation), 16 mass% of styrene acrylic resin (JONCRYL J-63: available from BASF), 2 mass% of triethanolamine, 10 mass% of ethylene glycol, and 48 mass% of distilled water was dispersed for 10 minutes by using a paint shaker using glass beads having a particle size of 1 mm as a media, and thus a black pigment dispersion 1 having the following particle size distribution was obtained.
D50: 0.5 µm, D10: 0.2 µm, D90: 3.4 µm

### Production Example 2: Production of black pigment dispersion 2 of requirements X to Z

A black pigment dispersion 2 having the following particle size distribution was obtained by changing the dispersion time of the Production Example 1 to 3 minutes.
D50: 1.2 µm, D10: 0.3 µm, D90: 6.1 µm

### Production Example 3: Production of black pigment dispersion 3 of requirements X to Z

A black pigment dispersion 3 having the following particle size distribution was obtained by changing the dispersion time of the Production Example 1 to 30 minutes.
D50: 0.1 µm, D10: 0.04 µm, D90: 1.2 µm

### Examples 1 to 6 and Comparative Examples 1 to 3

Each ink composition for water-based ballpoint pens was prepared by an ordinary method using the blending composition listed in Table 1 below together with the black pigment dispersions 1 to 3 of Production Examples 1 to 3 described above.

X (D50), Y (D10), and Z (D90) of the black pigment in each of the ink compositions for water-based ballpoint pens obtained in Examples 1 to 6 and Comparative Examples 1 to 3 described above were calculated, and the degree of blackness of a drawn line and glossiness were evaluated by the following evaluation methods.

These results are shown in Table 1 below.

### Evaluation methods

### Making of water-based ballpoint pen

Water-based ballpoint pens were made using each of the ink compositions obtained above. Specifically, using a holder of a ballpoint pen (product name: UM-100, available from Mitsubishi Pencil Co., Ltd.), a refill including an ink storage tube made of polypropylene having an inner diameter of 3.8 mm and a length of 90 mm, a stainless steel tip (cemented carbide ball, ball diameter: 0.7 mm) and a joint connecting the storage tube and the tip was filled with each of the water-based inks described above, and an ink follower composed mainly of a mineral oil was inserted at the rear end of the ink, thus making a water-based ballpoint pen. Using the obtained water-based ballpoint pen in each of the Examples, the degree of blackness of a drawn line and glossiness were evaluated by the following evaluation methods.

### Evaluation method of degree of blackness of drawn line

The degree of blackness of a drawn line was evaluated by drawing a square with 1 cm sides on a commercially available PPC paper and filling in the square, and evaluating based on the following criteria. Evaluation criteria:
A: Black more intense than liquid India ink
B: Black equivalent to liquid India ink
C: Black less intense than liquid India ink

### Evaluation method of glossiness

The glossiness was evaluated by drawing a square with 1 cm sides on a commercially available PPC paper and filling in the square, and evaluating based on the following criteria.

Evaluation criteria:
A: Glossiness equivalent to the glossiness of liquid India ink
B: Glossiness more intense than the glossiness of liquid India ink
C: Glossiness less intense than the glossiness of liquid India ink

**[Table 1]**

| (Total amount: 100 mass%) | | | | | | | | | | |
|---|---|---|---|---|---|---|---|---|---|---|
| | | | Examples | | | | | | Comparative Examples | |
| | | | 1 | 2 | 3 | 4 | 5 | 6 | 1 | 2 |
| Black pigment | Black pigment dispersion 1 | Production Example 1 | 10 | 8 | 15 | 15 | | 10 | | |
| | Black pigment dispersion 2 | Production Example 2 | 10 | 8 | 15 | | 15 | 5 | 30 | |
| | Black pigment dispersion 3 | Production Example 3 | 10 | 8 | 15 | 15 | 15 | 15 | | 30 |
| Aromatic substance | Borneol | | 0.5 | 0.2 | 0.05 | 0.3 | 1 | 3 | 0.5 | 0.3 |
| Thickener | Xanthan gum | KELZAN S (available from Sansho Co., Ltd.) | 0.3 | 0.3 | 0.3 | 0.3 | 0.3 | 0.3 | 0.3 | 0.3 |
| pH Modifier | Triethanol amine | | 0.1 | 0.1 | 0.1 | 0.1 | 0.1 | 0.1 | 0.1 | 0.1 |
| Corrosion inhibitor | Benzotriazol | | 0.3 | 0.3 | 0.3 | 0.3 | 0.3 | 0.3 | 0.3 | 0.3 |
| Preservative | Benziso thiazoline | BIODEN 421 (available from Daiwa Chemical Industries Co., Ltd.) | 0.3 | 0.3 | 0.3 | 0.3 | 0.3 | 0.3 | 0.3 | 0.3 |
| Lubricant | Phosphate ester | RD-510Y (available from Toho Chemical Industry Co., Ltd.) | 0.3 | 0.3 | 0.3 | 0.3 | 0.3 | 0.3 | 0.3 | 0.3 |
| Organic solvent | Glycerin | | 10 | 10 | 10 | 10 | 10 | 10 | 10 | 10 |
| Water | Distilled water | | 58.2 | 64.5 | 43.65 | 58.4 | 57.7 | 55.7 | 58.2 | 58.4 |
| X: D₅₀ (µm) | | | 0.6 | 0.6 | 0.5 | 0.3 | 0.7 | 0.4 | 1.2 | 0.1 |
| Y: D₁₀ (µm) | | | 0.18 | 0.16 | 0.18 | 0.12 | 0.17 | 0.14 | 0.3 | 0.04 |
| Z: D₉₀ (µm) | | | 3.6 | 3.8 | 3.8 | 2.3 | 3.7 | 2.8 | 6.1 | 1.2 |
| Black pigment: (volume-average particle size)/(number-average particle size) | | | 5.3 | 4.9 | 6.2 | 2.9 | 7.6 | 5.8 | 3.9 | 2.6 |
| Evaluation of water-based ballpoint pen: degree of blackness | | | A | A | A | B | A | A | B | C |
| Evaluation of water-based ballpoint pen: glossiness | | | A | A | A | A | A | A | C | B |

As is clear from the results in Table 1 above, it was confirmed that the ink compositions for water-based ballpoint pens of Examples 1 to 6, which were within the range of the present disclosure, achieved superior degree of blackness and glossiness of a drawn line to those of Comparative Examples 1 and 2, which were outside of the range of the present disclosure, and produced a drawn line in intense black like liquid India ink. It had an aroma evoking the distinctive aroma of India ink.

Furthermore, the ink composition of Example 1 was filled in the water-based ballpoint pen (ball diameter: 0.7 mm) described above and water-based ballpoint pens obtained by changing the ball diameter of the water-based ballpoint pen described above to 0.5 mm or 0.38 mm, and thus water-based ballpoint pens were prepared. The flow in mg per 100 m was calculated by using each of these water-based ballpoint pens based on the following method, and thus A (average flow) /B (ball diameter) was determined.

### Calculation method of flow (mg) per 100 m

Spiral writing by machine writing test was performed at a writing load of 100 gf, writing angle of 75°, and writing speed of 4.5 mm/min, and the flow between 0 to 100 m was calculated.

It was confirmed that the A/B of the water-based ballpoint pen (ball diameter: 0.7 mm) was 330, the A/B of the water-based ballpoint pen (ball diameter: 0.5 mm) was 385, and the A/B of the water-based ballpoint pen (ball diameter: 0.38 mm) was 270. Furthermore, it was also confirmed that these water-based ballpoint pens can produce a drawn line that is intensely pitch-black even with the relatively large flow.

### Industrial Applicability

An ink composition suitable for water-based ballpoint pens is obtained.

## Claims

1. An ink composition for a water-based ballpoint pen comprising at least a black pigment and borneol, the black pigment satisfying requirements X to Z below:
X: 50% particle size (D50) in a cumulative particle size distribution in terms of volume being 0.2 to 1.0 µm,
Y: 10% particle size (D10) in a cumulative particle size distribution in terms of volume being 0.1 to 0.3 um, and
Z: 90% particle size (D90) in a cumulative particle size distribution in terms of volume being 1.0 to 5.0 um.

2. The ink composition for a water-based ballpoint pen according to claim 1, wherein the black pigment has (volume-average size) / (number-average size) of 2 to 8.

3. A water-based ballpoint pen equipped with the ink composition for a water-based ballpoint pen according to claim 1 or 2.

4. The water-based ballpoint pen according to claim 3, wherein A/B is 250 to 500, where A is an average flow of the water-based ballpoint pen (mg/0-100 m), and B is a ball diameter (mm).
